# FASCICULE DE BREVET EUROPEEN

(11) **EP 2 373 909 B1**
(45) Date de publication et mention de la délivrance du brevet: **05.12.2018**
(21) Numéro de dépôt: 09775227.3
(22) Date de dépôt: 18.12.2009
(51) Int. Cl.: F03B 13/10, F03B 13/26, F16H 13/06

(54) **ENSEMBLE DE RECUPERATION DE L'ENERGIE D'UN FLUIDE NATURELLEMENT EN MOUVEMENT**
MULTIPLIZIERVORRICHTUNG FÜR EINEN ENERGIERÜCKWINNUNGSEINRICHTUNG EINES NATÜRLICH BEWEGENDE FLÜSSIGKEIT
MULTIPLIER DEVICE USED IN A ENERGY RECOVERY DEVICE OF A NATURALLY MOVING FLUID

(30) Priorité: 18.12.2008 FR 0858764
(43) Date de publication de la demande: 12.10.2011
(73) Titulaire: Guinard, Paul, 92210 Saint Cloud (FR)
(72) Inventeur: Guinard, Paul, 92210 Saint Cloud (FR)
(74) Mandataire: Regimbeau
(86) Numéro de dépôt international: PCT/EP2009/067478
(87) Numéro de publication internationale: WO 2010/070080

(56) Documents cités:
- EP-A- 1 830 103
- FR-A- 2 286 317
- FR-A- 2 913 728
- JP-A- 58 091 954

## Description

### DOMAINE DE L'INVENTION

L'invention concerne un ensemble de récupération de l'énergie d'un fluide naturellement en mouvement comprenant un dispositif multiplicateur.

### ETAT DE LA TECHNIQUE

Le document FR 2 913 729 A1 décrit un appareil pour capter une énergie cinétique d'un fluide naturellement en mouvement, tel qu'un courant marin ou atmosphérique, comprenant une hélice entrainée en rotation par le fluide, un premier arbre connecté à l'hélice, un mécanisme multiplicateur, un deuxième arbre et une pompe centrifuge multicellulaire entrainée par le deuxième arbre. Le mécanisme multiplicateur permet de convertir le mouvement de rotation du premier arbre en un mouvement de rotation du deuxième arbre présentant une vitesse de rotation supérieure. La pompe prélève du fluide et l'injecte dans un conduit. Le fluide est mis en circulation dans le conduit vers des moyens distants de stockage ou de conversion.

Le document WO 2008/113771 A1 propose de tirer partie des efforts générés par l'hélice et la pompe pour réaliser un équilibrage total ou partiel des efforts de poussée exercés par l'hélice et la pompe sur le premier arbre et le deuxième arbre. Ainsi l'effort de poussée exercé par l'hélice est au moins en partie compensé par un effort de poussée opposée exercé par la pompe centrifuge multicellulaire.

Cependant, afin d'obtenir un équilibrage des efforts, la pompe doit être dimensionnée (diamètre, nombre d'étages) pour fournir un effort de poussée approprié.

Une fois la pompe dimensionnée de manière appropriée, il est nécessaire de convertir la vitesse de rotation en sortie de l'hélice en une vitesse de rotation adaptée pour entrainer la pompe.

Or la plupart des dispositifs multiplicateurs (ou réducteurs) mécaniques à engrenages existants ne sont pas adaptés pour être raccordés à des arbres de transmission soumis à des efforts axiaux de traction ou de compression.

En outre, les dispositifs multiplicateurs mécaniques à engrenages nécessitent des opérations de maintenance, et notamment un apport en lubrifiant.

Or, il est nécessaire de limiter au maximum les opérations de maintenance dans les cas où l'appareil est destiné à être installé dans des lieux difficiles d'accès, tel qu'en milieu marin, et au surplus dans un milieu où le courant est important.

### PRESENTATION DE L'INVENTION

Un but de l'invention est de proposer un ensemble ayant un dispositif multiplicateur adapté pour un usage dans des lieux difficiles d'accès, tel qu'en milieu marin.

Ce problème est résolu dans le cadre de la présente invention grâce à un ensemble de conversion de l'énergie d'un fluide naturellement en mouvement, comprenant :
- une hélice apte à être entrainée en rotation par le fluide, l'hélice étant connectée à un arbre moteur,
- une pompe connectée à un arbre récepteur pour entrainer la pompe,
- un dispositif multiplicateur apte à convertir un premier mouvement de rotation de l'arbre moteur en un deuxième mouvement de rotation de l'arbre récepteur,
dans lequel le dispositif multiplicateur comprend un élément planétaire, un élément porte-satellite, un élément couronne et au moins un satellite supporté par l'élément porte-satellite, le satellite présentant une surface d'entrainement apte à venir en contact avec une surface d'entrainement de l'élément couronne d'une part et une surface d'entrainement de l'élément planétaire d'autre part pour transmettre un mouvement de rotation d'un premier arbre moteur à un deuxième arbre récepteur connectés chacun à l'un des éléments, la transmission du premier arbre au deuxième arbre étant réalisée par friction entre les surfaces d'entrainement du satellite et de l'élément couronne ou de l'élément planétaire.

Par le terme « friction », on désigne une transmission réalisée par adhérence entre les surfaces d'entrainement, par opposition à une transmission par obstacle, telle qu'elle se produit dans un mécanisme à engrenage.

Le dispositif multiplicateur proposé nécessite peu d'opérations de maintenance.

En outre, le dispositif multiplicateur est particulièrement peu sensible à l'usure. En effet, du fait que la transmission du premier arbre au deuxième arbre étant réalisée par friction, il se produit un ajustement naturel des positions des composants les uns par rapport aux autres, ce qui permet à l'ensemble de fonctionner malgré l'usure du dispositif multiplicateur.

L'ensemble proposé est particulièrement adapté pour être utilisé en milieu marin, dans lequel l'action du courant varie de manière périodique. En effet, le dispositif multiplicateur permet un embrayage progressif de l'hélice et de la pompe lors de phases de démarrage de l'ensemble.
- Initialement, l'hélice et la pompe sont découplées, de sorte que l'hélice n'est pas freinée par la pompe. Lorsque le courant croît, l'hélice est entrainée en rotation avec une vitesse croissante.
- Lorsque le courant atteint une certaine vitesse, l'hélice et/ou la pompe génèrent sur les arbres moteur et/ou récepteur un effort axial qui provoque la mise en prise des composants du dispositif multiplicateur. Cette mise en prise permet le couplage de l'hélice et de la pompe, de sorte que le mouvement de l'hélice est transmis à la pompe.

L'ensemble peut en outre présenter les caractéristiques suivantes :
- la surface de contact du satellite et/ou les surfaces de contact de l'élément couronne et de l'élément planétaire est(sont) lisse(s),
- au moins une des surfaces d'entrainement est de forme conique de révolution,
- au moins une des surfaces d'entrainement est une surface de révolution convexe définie par une génératrice courbe,
- la transmission du premier arbre au deuxième arbre est réalisée par friction entre les surfaces d'entrainement du satellite et de l'élément couronne ou de l'élément planétaire au niveau d'un point de contact,
- l'élément porte satellite comprend un bras sur lequel sont montés à rotation plusieurs satellites,
- l'un des arbres moteur et récepteur est soumis à un effort axial, de sorte que la surface d'entrainement du satellite est maintenue en appui contre la surface d'entrainement de l'élément couronne et/ou de l'élément planétaire sous l'effet de l'effort de traction,
- l'effort axial est un effort de traction,
- l'ensemble est apte à pivoter par rapport au sol autour d'un axe de rotation, l'hélice et la pompe est agencées de sorte que le centre de gravité de l'ensemble coïncide sensiblement avec l'axe de rotation.

### PRESENTATION DES FIGURES

D'autres caractéristiques et avantages ressortiront encore de la description qui suit, laquelle est purement illustrative et non limitative et doit être lue en regard des figures annexées parmi lesquelles :
- les figures 1A et 1B représentent de manière schématique un dispositif multiplicateur conforme à un premier mode de réalisation de l'invention,
- la figure 1C représente de manière schématique une variante du dispositif des figures 1A et 1B,
- la figure 2 est un diagramme représentant de manière schématique la vitesse périphérique de l'élément planétaire, de l'élément couronne et d'un satellite, en fonction du rayon considéré,
- la figure 3 représente de manière schématique des dispositifs multiplicateurs agencés en série,
- les figures 4A et 4B représentent de manière schématique un dispositif multiplicateur conforme à un deuxième mode de réalisation de l'invention,
- les figures 5A, 5B et 5C représentent de manière schématique un ensemble de récupération de l'énergie d'un courant marin comprenant un dispositif multiplicateur conforme à l'invention,
- la figure 5D représente de manière schématique une variante de l'ensemble des figures 5A à 5C.

### DESCRIPTION DETAILLEE DE MODES DE REALISATION

### Premier mode de réalisation

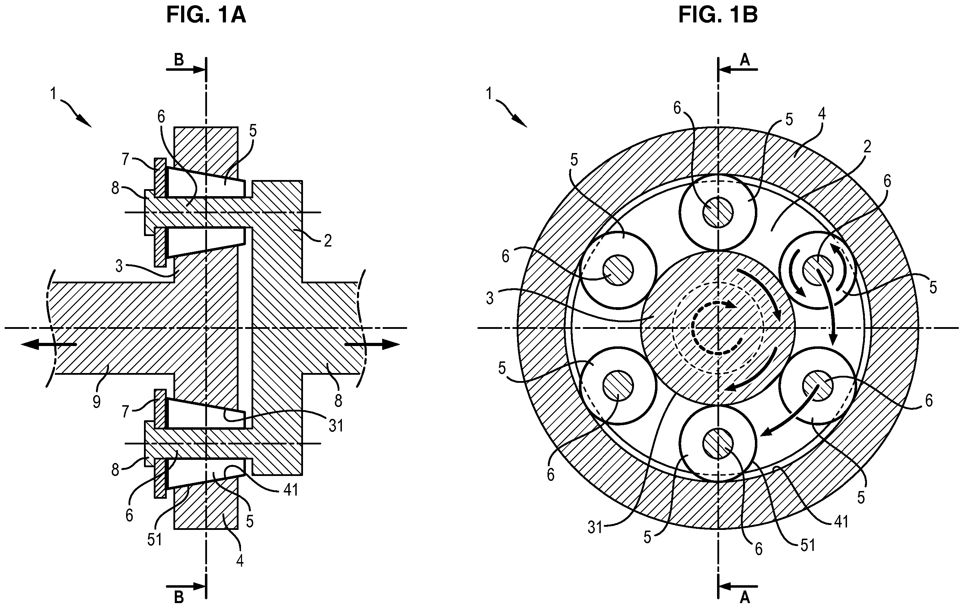

Sur les figures 1A et 1B, le dispositif multiplicateur 1 est un dispositif de type train épicycloïdal, comprenant un élément porte-satellite 2, un élément planétaire 3, un élément couronne 4 et une pluralité de satellites 5 supportés par l'élément porte-satellite.

L'élément porte-satellite 2 comprend une pluralité de bras 6 et une pluralité de butées à bille 7 (ou butées lisses), chaque bras 6 supportant un satellite 5 monté à rotation sur le bras et une butée à bille 7 (ou butée lisse). Chaque bras 6 comprend au niveau d'une extrémité libre, une pièce d'arrêt 8 permettant de maintenir le satellite 5 sur le bras 6, la butée à bille 7 (ou butée lisse) étant interposée entre la pièce d'arrêt 8 et le satellite 5.

L'élément planétaire 3, l'élément couronne 4 et les satellites 5 comprennent chacun une surface d'entrainement. La surface d'entrainement 51 de chaque satellite 5 est en contact avec la surface d'entrainement 41 de l'élément couronne 4 d'une part, et avec la surface d'entrainement 31 de l'élément planétaire 3 d'autre part.

Dans ce premier mode de réalisation, la surface d'entrainement 51 de chaque satellite 5 est lisse (c'est-à-dire dépourvues de dents) et présente une forme conique de révolution.

De même, les surfaces d'entrainement 31 et 41 de l'élément planétaire 3 et de l'élément couronne 4 sont lisses et présentent une forme conique de révolution.

L'élément porte-satellite 2 est relié à un premier arbre 8 (arbre moteur) et l'élément planétaire 3 est relié à un deuxième arbre 9 (arbre récepteur). Le premier arbre 8 et le deuxième arbre 9 sont coaxiaux et sont aptes à être entrainés en rotation autour d'un axe de rotation commun O.

Dans cette configuration, l'élément couronne 4 est immobilisé, de sorte que le dispositif multiplicateur 1 est apte à convertir un premier mouvement de rotation du premier arbre 8 en un deuxième mouvement de rotation du deuxième arbre 9.

En effet, le premier arbre 8 entraine en rotation l'élément porte-satellite 2. Les satellites 5 se déplacent le long de l'élément couronne 4. Les surfaces d'entrainement 51 des satellites 5 étant en contact avec la surface d'entrainement 41 de l'élément couronne 4, les satellites 5 sont entrainés en rotation autour de leurs bras 6 respectifs. Les surfaces d'entrainement 51 des satellites 5 étant en contact avec les la surface d'entrainement 31 de l'élément planétaire 3, l'élément planétaire 3 est entrainé en rotation autour de l'axe O. L'élément planétaire 3 entraine en rotation le deuxième arbre 9.

Sur la figure 1A, le premier arbre 8 est relié à un dispositif moteur (tel qu'une hélice) et le deuxième arbre 9 est relié à un dispositif récepteur (tel qu'une pompe). Le dispositif moteur et le dispositif récepteur sont agencés de sorte qu'ils exercent sur les arbres 8 et 9 des efforts de traction. Les efforts de tractions tendent à éloigner les arbres l'un de l'autre.

Le dispositif multiplicateur 1 est conçu pour résister aux efforts de traction et tirer partie de ces efforts pour permettre une transmission de mouvement entre les arbres 8 et 9.

A cet effet, les surfaces d'entrainement 51 des satellites 5 présentent une forme qui converge vers le dispositif moteur.

De manière complémentaire, les surfaces d'entrainement 31 et 41 de l'élément planétaire 3 et de l'élément couronne 4 présentent une forme qui diverge vers le dispositif moteur.

Du fait de la forme spécifique des surfaces d'entrainement 31, 41 et 51, chaque satellite 5 vient en contact avec l'élément planétaire 3 et l'élément couronne 4 au niveau d'une ligne de contact L se déplaçant le long de la surface de contact conique.

Ainsi les zones de contact entre les surfaces d'entrainement sont inclinées par rapport à la direction O de rotation des arbres 8 et 9. Du fait de l'orientation des surfaces d'entrainement, il se crée au niveau de ces zones de contact une composante de réaction tangentielle qui s'oppose au glissement des surfaces d'entrainement les unes par rapport aux autres.

Les efforts de traction s'exerçant sur les arbres 8 et 9 ont pour effet de maintenir les satellites 5 en appui sur l'élément planétaire 3 et l'élément couronne 4, ce qui permet la transmission du mouvement de l'élément porte-satellite 2 à l'élément planétaire 3 par friction entre les surfaces d'entrainement 31 et 51 d'une part et 41 et 51 d'autre part.

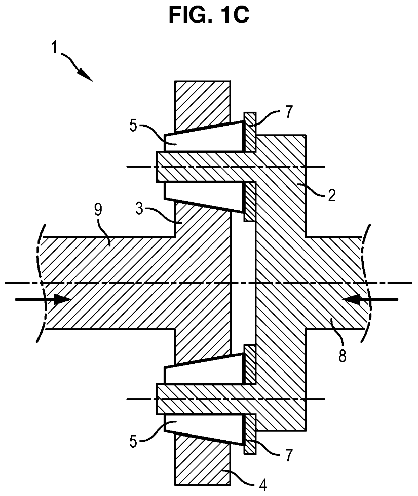

La figure 1C représente une variante du dispositif des figures 1A et 1B. Dans cette variante, les arbres moteur et récepteur sont soumis à des efforts de compression.

Dans cette variante, le dispositif multiplicateur est conçu pour résister aux efforts de compression et tirer partie de ces efforts pour permettre une transmission de mouvement entre les arbres.

A cet effet, le dispositif multiplicateur présente une disposition inversée par rapport à celle du dispositif des figures 1A et 1B. Les surfaces d'entrainement des satellites présentent une forme qui diverge vers le dispositif moteur.

De manière complémentaire, les surfaces d'entrainement de l'élément planétaire et de l'élément couronne présentent une forme qui converge vers le dispositif moteur.

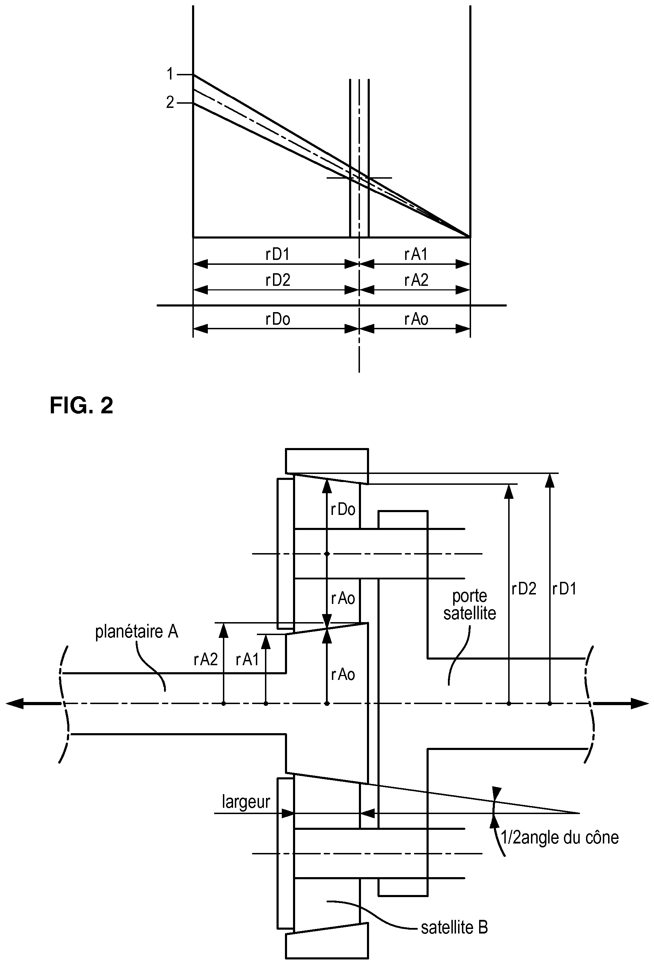

La figure 2 est un diagramme représentant de manière schématique la vitesse périphérique de l'élément planétaire 3, de l'élément couronne 4 et d'un satellite 5, en fonction du rayon considéré

On définit les paramètres suivants :
- rD₀: Rayon médian du satellite
- rD₁: Rayon maximal de l'élément couronne
- rD₂: Rayon minimal de l'élément couronne
- rA₀: Rayon médian du planétaire
- rA₁: Rayon minimal de l'élément planétaire
- rA₂: Rayon maximal de l'élément planétaire
- r: Largeur de contact entre un satellite et l'élément planétaire ou l'élément couronne
- α: Angle de la surface conique du satellite par rapport à son axe de révolution

On constate que du fait de la forme conique de l'élément planétaire 3, de l'élément couronne 4 et des satellites 5, les vitesses périphériques varient en fonction du rayon considéré. Cette variation de vitesse induit nécessairement un glissement de la surface d'entrainement des satellites par rapport aux surfaces d'entrainement de l'élément planétaire et de l'élément couronne. Ce glissement est d'autant plus important que la largeur r de contact et l'angle α sont élevés.

Pour remédier à cet inconvénient, il est proposé un deuxième mode de réalisation du dispositif multiplicateur.

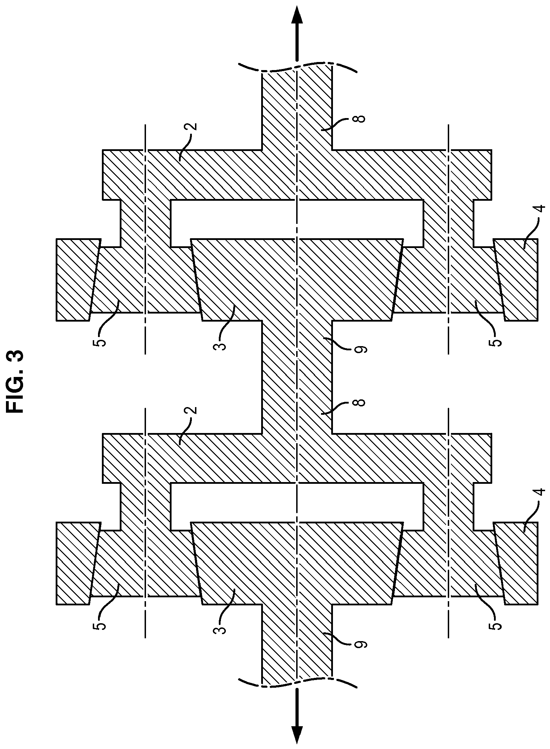

La figure 3 représente de manière schématique un dispositif formé de plusieurs dispositifs multiplicateurs 1 unitaires connectés en série. Plus précisément, l'arbre récepteur 9 d'un premier dispositif est relié à l'arbre moteur 8 d'un deuxième dispositif, de sorte que le premier dispositif entraine le deuxième dispositif.

### Deuxième mode de réalisation

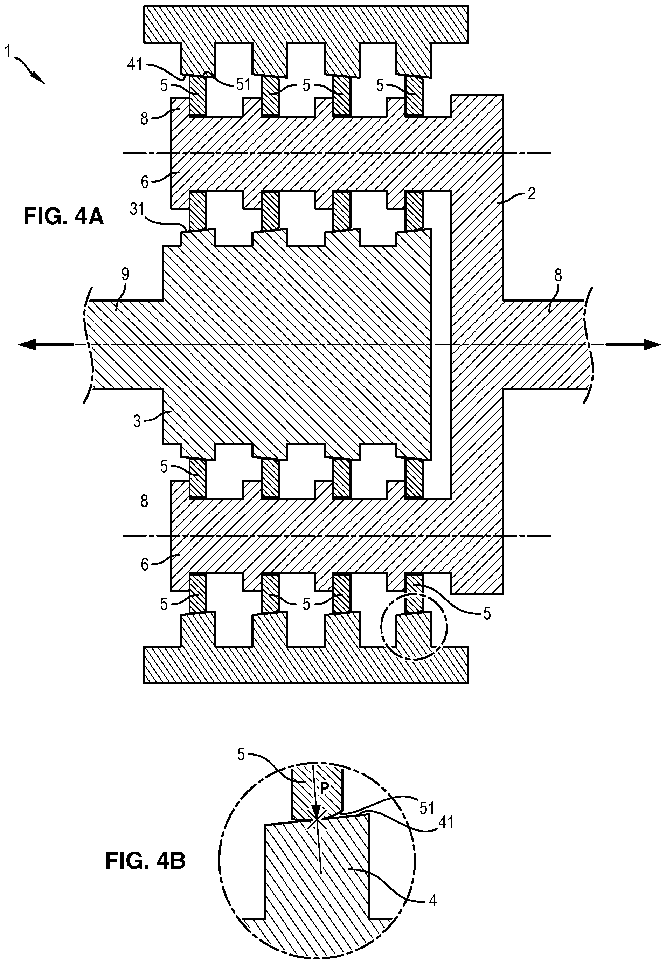

Sur les figures 4A et 4B, le dispositif multiplicateur 1 est sensiblement identique au dispositif des figures 1A et 1B. Le dispositif multiplicateur 1 est un dispositif de type train épicycloïdal, comprenant un élément porte-satellite 2, un élément planétaire 3, un élément couronne 4 et une pluralité de satellites 5 supportés par l'élément porte-satellite.

L'élément porte-satellite 2 comprend une pluralité de bras 6, chaque bras 6 supportant une pluralité de satellites 5 montés à rotation sur le bras. Chaque bras 6 comprend une pluralité de pièces d'arrêt 8 permettant de maintenir les satellites 5 sur le bras 6.

L'élément planétaire 3, l'élément couronne 4 et les satellites 5 comprennent chacun une surface d'entrainement. La surface d'entrainement 51 de chaque satellite 5 est en contact avec la surface d'entrainement 41 de l'élément couronne 4 d'une part, et avec la surface d'entrainement 31 de l'élément planétaire 3 d'autre part.

Dans ce deuxième mode de réalisation, la surface d'entrainement 51 de chaque satellite 5 est lisse (c'est-à-dire dépourvues de dents). Comme cela est visible sur la figure 4B, la surface d'entrainement 51 est une surface de révolution convexe définie par une génératrice courbe.

Les surfaces d'entrainement 31 et 41 de l'élément planétaire 3 et de l'élément couronne 4 sont lisses et présentent une forme conique de révolution.

Du fait de la forme spécifique des surfaces d'entrainement 31, 41 et 51, chaque satellite 5 vient en contact avec l'élément planétaire 3 et l'élément couronne 4 au niveau d'un point de contact P se déplaçant le long d'une ligne de contact circulaire. Cela permet d'éviter les écarts de vitesse dus à la variation du rayon se produisant dans le cas d'un contact au niveau d'une ligne (comme dans le cas du premier mode de réalisation).

En compensation, chaque bras 6 de l'élément porte-satellite 6 supporte une pluralité de satellites 5, de manière à multiplier les points de contact entre les satellites 5 et l'élément planétaire 3, et entre les satellites 5 et l'élément couronne 4.

De même que dans le premier mode de réalisation, le dispositif multiplicateur 1 est conçu pour résister aux efforts de traction et tirer partie de ces efforts pour permettre une transmission de mouvement entre les arbres 8 et 9.

A cet effet, les surfaces d'entrainement 51 des satellites 5 présentent une forme qui converge vers le dispositif moteur.

De manière complémentaire, les surfaces d'entrainement 31 et 41 de l'élément planétaire 3 et de l'élément couronne 4 présentent une forme qui diverge vers le dispositif moteur.

Ainsi les zones de contact entre les surfaces d'entrainement sont inclinées par rapport à la direction O de rotation des arbres 8 et 9. Du fait de l'orientation des surfaces d'entrainement, il se crée au niveau de ces zones de contact une composante de réaction tangentielle qui s'oppose au glissement des surfaces d'entrainement les unes par rapport aux autres.

Les efforts de traction s'exerçant sur les arbres 8 et 9 ont pour effet de maintenir les satellites 5 en appui sur l'élément planétaire 3 et l'élément couronne 4, ce qui permet la transmission du mouvement de l'élément porte-satellite 2 à l'élément planétaire 3 par friction entre les surfaces d'entrainement 31 et 51 d'une part et 41 et 51 d'autre part.

### Ensemble de récupération de l'énergie d'un courant marin

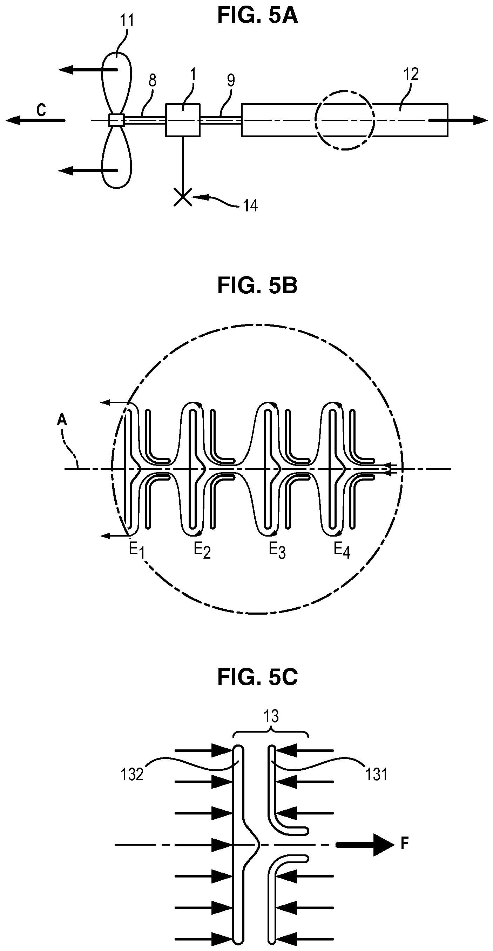

Les figures 5A, 5B et 5C représentent de manière schématique un ensemble 10 de récupération de l'énergie d'un courant marin C.

L'ensemble 10 comprend une hélice 11 apte à être entrainée en rotation par le courant C, un dispositif multiplicateur 1 et une pompe centrifuge multicellulaire 12. L'ensemble comprend également un premier arbre 8 (arbre moteur) reliant l'hélice 11 au dispositif multiplicateur 1 et un deuxième arbre 9 (arbre récepteur) reliant le dispositif multiplicateur 1 à la pompe centrifuge multicellulaire 12.

En fonctionnement, le mouvement de rotation de l'hélice 11 est transmis par le biais du premier arbre 8, du dispositif multiplicateur 1 et du deuxième arbre 9 à la pompe 12. Le dispositif multiplicateur 1 permet de convertir le mouvement de rotation du premier arbre 8 (premier mouvement de rotation) en un mouvement de rotation du deuxième arbre 9 présentant une vitesse de rotation supérieure (deuxième mouvement de rotation).

Le deuxième arbre 9 entraine la pompe 12. La pompe prélève de l'eau de mer et injecte l'eau ainsi prélevée dans un conduit de circulation. L'eau de mer est injectée par la pompe à une pression élevée et est acheminée par le conduit vers un site distant de stockage ou de conversion. L'eau de mer sous pression peut être utilisée pour alimenter une turbine entrainant un générateur permettant de fournir de l'énergie électrique.

Le dispositif multiplicateur 1 est par exemple apte à convertir une vitesse de rotation du premier arbre 8 comprise entre 100 et 300 tours par minute en une vitesse de rotation du deuxième arbre 9 comprise entre 500 et 15000 tours par minute.

L'ensemble 10 est en outre relié au sol par un point d'ancrage 14. L'ensemble 10 est conçu pour « éviter », c'est-à-dire pour s'orienter naturellement en fonction de la direction du courant C, de sorte que l'ensemble 10 est toujours aligné avec la direction du courant. En particulier, l'ensemble 10 est monté pivotant par rapport au sol autour d'un axe vertical passant par un point d'ancrage 14 de l'ensemble.

La figure 5B illustre de manière schématique le trajet de lignes de courant de fluide mis en compression dans la pompe centrifuge multicellulaire.

Chaque étage Ei de la pompe centrifuge multicellulaire est délimité par une aube qui tourne autour d'un axe A de la pompe. Chaque aube comprend une portion centrale évidée pour recevoir à proximité de l'axe A l'eau en provenance de l'étage précédent de la pompe. La rotation de l'aube éjecte l'eau par la seule sortie offerte par l'aube, à savoir une sortie périphérique.

L'eau est ainsi injectée d'un étage à l'autre, sa pression étant augmentée à la traversée de l'aube.

Comme cela est illustré sur la figure 5C, chaque aube 13 présente une face amont 131 et une face avale 132 dont la surface est supérieure à la surface de la face amont. La force de pression F exercée par le fluide en circulation sur chaque aube 13 est donc dirigée vers l'amont. Les forces de pression additionnées des aubes de la pompe centrifuge multicellulaire génèrent ainsi sur l'arbre récepteur 9 une force de traction dirigée vers l'amont qui tend à éloigner la pompe de l'hélice.

Le fait de disposer la pompe centrifuge multicellulaire 12 avec son axe de rotation parallèle ou sensiblement parallèle à la direction du courant permet de contrer la force de traction exercée par l'hélice 11 sur le premier arbre 8. Il est ainsi possible d'équilibrer les efforts axiaux s'exerçant sur les arbres 8 et 9.

Afin d'obtenir un équilibrage des efforts, la pompe est dimensionnée (diamètre, nombre d'étages) pour fournir un effort de traction sensiblement égal à l'effort de traction généré par l'hélice.

Le dispositif multiplicateur 1 permet de transformer le mouvement de rotation du premier arbre en un mouvement de rotation du deuxième arbre présentant une vitesse de rotation supérieure. Plus le rapport vitesse d'entrée / vitesse de sortie du dispositif multiplicateur 1 est élevé, plus le nombre d'étages de la pompe nécessaires pour mettre le fluide sous pression est faible.

La présence du dispositif multiplicateur 1 permet de réduire le nombre d'étages de la pompe nécessaires pour atteindre une pression donnée. Cela permet de limiter l'encombrement de la pompe centrifuge multicellulaire.

En outre, la pompe centrifuge multicellulaire peut être dimensionnée pour obtenir un ensemble 10 équilibré, c'est-à-dire présentant un centre de gravité situé sensiblement sur l'axe de pivotement de l'ensemble à la verticale du point d'ancrage 14 de l'ensemble 10.

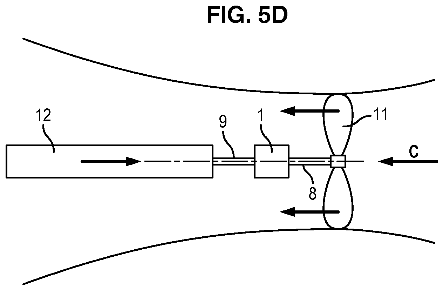

Enfin, l'hélice 11 et la pompe centrifuge multicellulaire 12 sont agencées pour que les arbres 8 et 9 soient soumis à des efforts de traction, et que la pompe centrifuge multicellulaire soit également soumise à un effort de traction. On pourrait bien entendu prévoir un agencement différent dans lequel les différents composants de l'ensemble seraient soumis à des efforts de compression (comme cela est représenté sur la figure 5D). Cependant, le fait que la pompe soit soumise à un effort de traction présente l'avantage d'éviter tout risque de flambage de la pompe.

L'ensemble 10 est typiquement destiné à être installé dans un milieu sous-marin dans lequel la vitesse du courant varie de manière périodique. Ainsi, l'hélice 11 est entrainée de manière périodique. Au cours d'une période, l'ensemble passe par des phases au cours desquelles la vitesse de l'hélice s'annule. Lorsque la vitesse de l'hélice est nulle, l'ensemble n'est pas entrainé et aucun effort de traction ne s'exerce sur les arbres 8 et 9. Lorsque la vitesse de l'hélice croit progressivement, l'effort de traction exercé par l'hélice sur le premier arbre 8 croit progressivement. Au démarrage de l'hélice 11, les satellites 5 ont tendance à patiner sur l'élément planétaire 3 et l'élément couronne 4 (c'est-à-dire que les surfaces d'entrainement 51 glissent sur les surfaces d'entrainement 31 et 41), jusqu'à ce que l'effort de traction exercé par l'hélice 11 soit suffisant pour que les surfaces d'entrainement viennent en appui les unes contre les autres et adhèrent entre elles.

Ce phénomène permet un embrayage progressif du dispositif multiplicateur 1.

Les phases répétées de patinage (glissement des surfaces d'entrainement) dues à la périodicité du courant peuvent provoquer au cours du temps une usure des surfaces d'entrainement.

Cependant, le dispositif multiplicateur 1 proposé est particulièrement peu sensible à l'usure. En effet, du fait que les satellites 5, l'élément planétaire 3 et l'élément couronne 4 présentent des surfaces d'entrainement lisses et convergentes, il se produit un ajustement naturel des positions des composants les uns par rapport aux autres, ce qui permet à l'ensemble de fonctionner malgré l'usure du dispositif multiplicateur.

## Revendications

1. Ensemble (10) de conversion de l'énergie d'un fluide naturellement en mouvement, comprenant :
- une hélice (11) apte à être entrainée en rotation par le fluide, l'hélice (11) étant connectée à un arbre moteur (8),
- une pompe (12) connectée à un arbre récepteur (9) pour entrainer la pompe (12),
- un dispositif multiplicateur (1) apte à convertir un premier mouvement de rotation de l'arbre moteur (8) en un deuxième mouvement de rotation de l'arbre récepteur (9),
**caractérisé en ce que** le dispositif multiplicateur (1) comprend un élément planétaire (3), un élément porte-satellite (2), un élément couronne (4) et au moins un satellite (5) supporté par l'élément porte-satellite (2), le satellite (5) présentant une surface d'entrainement (51) apte à venir en contact avec une surface d'entrainement (41) de l'élément couronne (4) d'une part et une surface d'entrainement (31) de l'élément planétaire (3) d'autre part pour transmettre un mouvement de rotation d'un premier arbre moteur (8) à un deuxième arbre récepteur (9) connectés chacun à l'un des éléments (2, 3, 4), la transmission du premier arbre (8) au deuxième arbre (9) étant réalisée par friction entre les surfaces d'entrainement (51, 41, 31) du satellite (5) et de l'élément couronne (4) ou de l'élément planétaire (3).

2. Ensemble selon la revendication 1, dans lequel la surface de contact (51) du satellite (5) et/ou les surfaces de contact de l'élément couronne (4) et de l'élément planétaire (3) est(sont) lisse(s).

3. Ensemble selon l'une des revendications 1 et 2, dans lequel au moins une des surfaces d'entrainement (51, 41, 31) est de forme conique de révolution.

4. Ensemble selon l'une des revendications qui précèdent, dans lequel au moins une des surfaces d'entrainement (51, 41, 31) est une surface de révolution convexe définie par une génératrice courbe.

5. Ensemble selon l'une des revendications qui précèdent, dans lequel la transmission du premier arbre (8) au deuxième arbre (9) est réalisée par friction entre les surfaces d'entrainement (51, 41, 31) du satellite (5) et de l'élément couronne (4) ou de l'élément planétaire (3) au niveau d'un point de contact (P).

6. Ensemble selon l'une des revendications qui précèdent, dans lequel l'élément porte satellite (2) comprend un bras (6) sur lequel sont montés à rotation plusieurs satellites (5).

7. Ensemble selon l'une des revendications qui précèdent, dans lequel l'un des arbres moteur et récepteur (8, 9) est soumis à un effort axial, de sorte que la surface d'entrainement (51) du satellite (5) est maintenue en appui contre la surface d'entrainement (41, 31) de l'élément couronne (4) et/ou de l'élément planétaire (3) sous l'effet de l'effort de traction.

8. Ensemble selon la revendication 7, dans lequel l'effort axial est un effort de traction.

9. Ensemble selon l'une des revendications qui précèdent, l'ensemble étant apte à pivoter par rapport au sol autour d'un axe de rotation, l'hélice (11) et la pompe (12) étant agencées de sorte que le centre de gravité de l'ensemble (10) coïncide sensiblement avec l'axe de rotation.

## Patentansprüche

1. Baugruppe (10) zur Umwandlung der Energie eines sich natürlich bewegenden Fluids, umfassend:
- eine Schraube (11), die geeignet ist, durch das Fluid drehbar angetrieben zu werden, wobei die Schraube (11) mit einer Antriebswelle (8) verbunden ist,
- eine Pumpe (12), die mit einer Abtriebswelle (9) zum Antrieb der Pumpe (12) verbunden ist,
- eine Getriebevorrichtung (1) mit Übersetzung ins Schnelle, die geeignet ist, eine erste Drehbewegung der Antriebswelle (8) in eine zweite Drehbewegung der Abtriebswelle (9) umzuwandeln,
**dadurch gekennzeichnet, dass**
die Getriebevorrichtung (1) mit Übersetzung ins Schnelle ein Sonnenradelement (3), ein Planetenradträgerelement (2), ein Kranzelement (4) und mindestens ein Planetenrad (5) umfasst, das durch das Planetenradträgerelement (2) unterstützt wird, wobei das Planetenrad (5) eine Antriebsfläche (51) aufweist, die geeignet ist, einerseits mit einer Antriebsfläche (41) des Kranzelements (4) und andererseits mit einer Antriebsfläche (31) des Sonnenradelements (3) in Kontakt zu gelangen, um eine Drehbewegung einer ersten Antriebswelle (8) auf eine zweite Abtriebswelle (9) zu übertragen, die jeweils mit einem der Elemente (2, 3, 4) verbunden sind, wobei die Übertragung von der ersten Welle (8) auf die zweite Welle (9) durch Reibung zwischen den Antriebsflächen (51, 41, 31) des Planetenrads (5) und des Kranzelements (4) oder des Sonnenradelements (3) ausgeführt wird.

2. Baugruppe nach Anspruch 1, wobei die Kontaktfläche (51) des Planetenrads (5) und/oder die Kontaktflächen des Kranzelements (4) und des Sonnenradelements (3) glatt ist/sind.

3. Baugruppe nach einem der Ansprüche 1 und 2, wobei mindestens eine von den Antriebsflächen (51, 41, 31) eine konische Umlaufform aufweist.

4. Baugruppe nach einem der vorhergehenden Ansprüche, wobei mindestens eine von den Antriebsflächen (51, 41, 31) eine konvexe Umlauffläche ist, die durch eine gekrümmte Mantellinie definiert ist.

5. Baugruppe nach einem der vorhergehenden Ansprüche, wobei die Übertragung von der ersten Welle (8) auf die zweite Welle (9) durch Reibung zwischen den Antriebsflächen (51, 41, 31) des Planetenrads (5) und des Kranzelements (4) oder des Sonnenradelements (3) im Bereich eines Kontaktpunkts (P) ausgeführt wird.

6. Baugruppe nach einem der vorhergehenden Ansprüche, wobei das Planetenradträgerelement (2) einen Arm (6) umfasst, an dem mehrere Planetenräder (5) drehbar gelagert sind.

7. Baugruppe nach einem der vorhergehenden Ansprüche, wobei eine von der Antriebs- und der Abtriebswelle (8, 9) einer Axialkraft ausgesetzt ist, derart, dass die Antriebsfläche (51) des Planetenrads (5) gegen die Antriebsfläche (41, 31) des Kranzelements (4) und/oder des Sonnenradelements (3) unter der Wirkung einer Zugkraft in Auflage gehalten wird.

8. Baugruppe nach Anspruch 7, wobei die Axialraft eine Zugkraft ist.

9. Baugruppe nach einem der vorhergehenden Ansprüche, wobei die Baugruppe geeignet ist, um eine Drehachse in Bezug zum Boden zu schwenken, wobei die Schraube (11) und die Pumpe (12) derart angeordnet sind, dass der Schwerpunkt der Baugruppe (10) im Wesentlichen mit der Drehachse übereinstimmt.

## Claims

1. An assembly (10) for converting the energy of a fluid in natural movement, comprising:
- a propeller (11) capable of being driven in rotation by the fluid, the propeller (11) being connected to a drive shaft (8),
- a pump (12) connected to a receiving shaft (9) for driving the pump (12),
- a gearbox (1) capable of converting a first rotation movement of the drive shaft (8) into a second rotation movement of the receiving shaft (9),
**characterized in that**
the gearbox (1) comprises a sun gear element (3), a carrier element (2), a ring gear element (4) and at least one planet gear (5) supported by the carrier element (2), the planet gear (5) having a drive surface (51) capable of coming into contact with a drive surface (41) of the ring gear element (4) on the one hand and a drive surface (31) of the sun gear element (3) on the other hand to transmit a rotation movement of a first drive shaft (8) to a second receiving shaft (9) each connected to one of the elements (2, 3, 4), the transmission from the first shaft (8) to the second shaft (9) being performed by friction between the drive surfaces (51, 41, 31) of the planet gear (5) and of the ring gear element (4) or of the sun gear element (3).

2. The assembly according to claim 1, wherein the contact surface (51) of the planet gear (5) and/or the contact surfaces of the ring gear element (4) and of the planet gear element (3) is(are) smooth.

3. The assembly according to one of claims 1 and 2, wherein at least one of the drive surfaces (51, 41, 31) has a circular-section conical shape.

4. The assembly according to one of the preceding claims, wherein at least one of the drive surfaces (51, 41, 31) is a convex surface of revolution defined by a curved generator.

5. The assembly according to one of the preceding claims, wherein the transmission from the first shaft (8) to the second shaft (9) is performed by friction between the drive surfaces (51, 41, 31) of the planet gear (5) and of the ring gear element (4) or of the sun gear element (3) at a contact point (P).

6. The assembly according to one of the preceding claims, wherein the carrier element (2) comprises an arm (6) on which several planet gears (5) are mounted in rotation.

7. The assembly according to one of the preceding claims, wherein one of the drive and receiving shafts (8, 9) is subjected to an axial load, so that the drive surface (51) of the planet gear (5) is held supported against the drive surface (41, 31) of the ring gear element (4) and/or of the sun gear element (3) under the influence of the tension load.

8. The assembly according to claim 7, wherein the axial load is a tension load.

9. The assembly according to one of the preceding claims, the assembly being capable of pivoting with respect to the ground around a rotation axis, the propeller (11) and the pump (12) being arranged so that the gravity center of the assembly (10) coincides substantially with the rotation axis.
